# DEMANDE DE BREVET EUROPEEN

(11) **EP 0 823 601 A1**
(43) Date de publication de la demande: **11.02.1998**
(21) Numéro de dépôt: 97401892.1
(22) Date de dépôt: 06.08.1997
(51) Int. Cl.: F25D 19/00, G01J 5/06, C22C 14/00

(54) **Dispositif de liaison à température cryogénique**

(30) Priorité: 07.08.1996 FR 9609961
(71) Demandeur: SAGEM SA, F-75783 Paris Cédex 16 (FR)
(72) Inventeur: Ruocco-Angari, Bernard, 75003 Paris (FR)
(74) Mandataire: Loisel, Bertrand

(57) **Abrégé**

Le dispositif est destiné à relier une source de froid (tel qu'une machine frigorifique constituant un mini-refroidisseur et un élément (16) porté à une température cryogénique lors de son utilisation. Il comprend un tube mince (10) délimitant un canal destiné à être occupé par un caloporteur, fermé à une extrémité par un couvercle relié thermiquement à l'élément et fixé à l'autre extrémité à une base (12) en contact avec l'ambiance. Le tube est en alliage à base de titane comportant de 6 à 8 % d'aluminium, de 1 à 5 % de vanadium ou de zirconium, de 0,5 à 1 % de molybdène et éventuellement 2 % au plus d'étain.

## Description

La présente invention a pour objet un dispositif de liaison entre une source de froid et un élément porté à une température cryogénique lors de son utilisation ; elle trouve une application particulièrement importante, bien que non exclusive, dans les appareils embarqués ou déplaçables dont la source froide est constituée par une machine frigorifique fonctionnant en cycle fermé (par exemple cycle de Stirling, de Gifford-MacMahon, de Vuillemier, de Carnot) ou en cycle ouvert (par exemple en détente de Joule Thomson). De telles machines frigorifiques ont un rendement très faible. En conséquence, toute variation des pertes thermiques qui s'ajoutent à la consommation de l'élément à porter à température cryogénique se répercute de façon très amplifiée sur le volume et la consommation de la machine frigorifique.

Pour réduire les pertes, on a déjà proposé un dispositif comprenant un tube mince délimitant un canal occupé par un caloporteur de refroidissement de l'élément, ce tube étant relié thermiquement à une extrémité à l'élément. L'autre extrémité est fixée à une base qui est directement ou indirectement en contact avec l'ambiance, à température très supérieure. On a déjà proposé l'utilisation de divers matériaux à faible coefficient de conductibilité thermique pour constituer le tube et on a par ailleurs déjà proposé de disposer ce tube dans un cryostat sous vide.

Une étude a montré les pertes par conduction dans le tube représentent plus de la moitié, et souvent près de 70 %, des pertes totales. En conséquence, il est apparu essentiel de constituer ce tube en des matériaux autres que ceux couramment utilisés jusque là, ayant un plus faible coefficient de conductibilité thermique mais répondant aussi à d'autres exigences telles qu'une perméabilité très faible aux caloporteurs généralement utilisés (hydrogène et surtout hélium ou azote liquide) et une possibilité de raccordement étanche à la base et à l'élément à refroidir ou à son support. La perméabilité très faible évite de "casser" le vide dans un cryostat entourant le tube.

Pour arriver à ce résultat, des matériaux ont été recherchés dans des domaines totalement étrangers à la cryogénie. De façon surprenante, ils ont été trouvés parmi ceux qui ont été élaborés pour résister au fluage à des températures très élevées, que l'on rencontre par exemple dans la partie chaude des turboréacteurs.

L'invention propose en conséquence un dispositif dont le tube est constitué en un alliage à base de titane comportant de 6 à 8 % d'aluminium, de 1 à 5 % de vanadium ou de zirconium, de 0,5 à 1 % de molybdène et éventuellement 2 % au plus d'étain.

Un tel dispositif est notamment utilisable pour porter à très basse température un détecteur infrarouge. Dans ce cas, le cryostat peut être constitué par une chemise entourant le tube, fixée à la base et fermée par un hublot en matériau transparent au rayonnement infrarouge.

Le tube peut constituer simplement un canal de circulation pour un caloporteur à basse température, tel que de l'azote ou de l'hélium liquide. Il peut également servir de canal de réception du gaz fourni par un éjecteur, dans le cas où la source est constituée par une machine à cycle ouvert. Le tube peut également constituer le cylindre de réception d'un piston régénérateur ou déplaceur, dans le cas d'une machine frigorifique à cycle fermé, à un ou double étage. Le tube peut également contenir un autre tube froid, de diamètre inférieur, de circulation du caloporteur.

Parmi les matériaux les plus intéressants, on peut notamment citer ceux qui contiennent, en poids, en plus du titane et des impuretés inévitables :
8 % Al, 1 % V, 1 % Mo
6 % Al, 5 % Zr, 0,5 % Mo
6 % Al, 5 % Zr, 2 % Sn, 1 % Mo

D'autres caractéristiques encore apparaîtront à la lecture de la description qui suit d'un mode particulier de réalisation, donné à titre d'exemple non limitatif. La description se réfère aux dessins qui l'accompagnent, dans lesquels :
- la figure 1 est une vue en coupe longitudinale d'un dispositif de liaison ;
- la figure 2 est un schéma simplifié montrant un appareil ayant un élément à porter à température cryogénique et une machine frigorifique miniature à cycle fermé, raccordé à la base du dispositif.

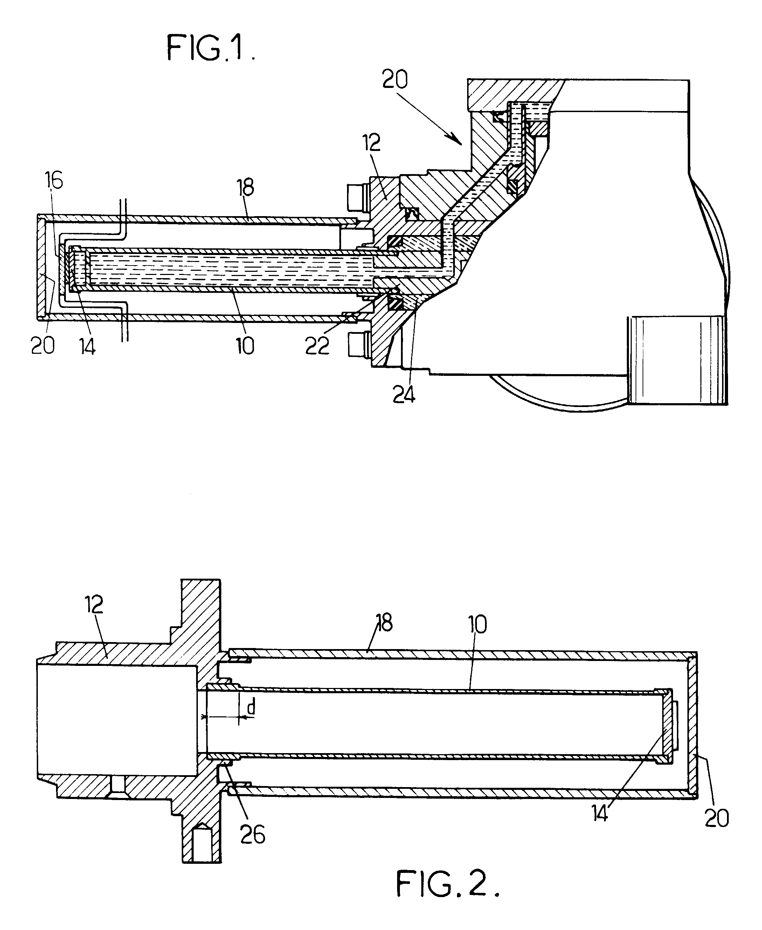

Le dispositif représenté schématiquement en figure 1 comprend un tube mince 10 dont une extrémité est fixée à une base 12 et dont l'autre extrémité est fermée par un couvercle 14, souvent appelé "cape". Il est incorporé à un appareil de détection de rayonnement infrarouge dont le détecteur 16 (élément, barrette ou matrice en matériau approprié, tel que Ag Cd Te ou In Sb) doit être porté à température cryogénique. Ce détecteur est relié thermiquement au couvercle 14 sur lequel il est fixé. L'ensemble constitué par le détecteur et le dispositif de liaison, souvent qualifié de "doigt froid", est placé dans un cryostat ayant une chemise 18, souvent en verre, ayant une face interne argentée pour être réfléchissante, et un hublot 20 en matériau transparent au rayonnement infrarouge à détecter. Le cheminée 18 est également fixée de façon étanche à la base 12 et délimite un espace isolant sous vide.

Le canal délimité par le tube 10 communique avec une source de fluide cryogénique 20. Dans le cas illustré en figure 1, cette source est une machine frigorifique fixée de façon amovible au dispositif, fonctionnant en cycle fermé. Cette machine peut être constituée par l'un quelconque de mini-refroidisseurs disponibles dans le commerce, ayant un boîtier sur lequel la base 12 est fixée.

Toujours dans le cas de la figure 1, la base reçoit un ensemble de liaison ayant un pion 22, qui s'engage dans le tube 10 et qui est percé d'un trou axial d'amenée de fluide cryogénique, et un manchon isolant 24. Le fluide cryogénique arrive au tube par le trou axial du pion et par des perçages radiaux du pion, du manchon et de la base.

Le tube 10 est en matériau à base de titane ayant un coefficient de conductibilité thermique très faible, aux températures cryogéniques, une très faible perméabilité aux gaz, soudable au couvercle (qui doit être en matériau thermiquement conducteur) et à la base. Ce matériau contient à titre d'additif, en plus de l'aluminium, des éléments réduisant notablement sa conductibilité thermique. Cette conductibilité, à 20°C (en W/m.K) est de :
5,9 pour un alliage à 8 % Al, 1 % V, 1 % Mo
4,2 pour un alliage à 6 % Al, 5 % Zr, 0,5 % Mo
4,2 pour un alliage à 6 % Al, 5 % Zr, 2 % Sn, 1 %.

A titre de comparaison, la conductibilité pour un alliage à 6 % Al et 4 % V est de 6,7.

Un dispositif a été réalisé avec un tube en un alliage recuit du type ci-dessus de 6 mm de diamètre et 0,12 mm d'épaisseur. La base 12, destinée à recevoir le tube et la chemise 18, était également en alliage à base de titane contenant de l'aluminium, éventuellement identique à celui du tube, usinée et rectifiée, présentant un prolongement 26 dans lequel s'emboîte le tube 10. Pour faciliter le soudage du tube sur la base, l'extrémité du tube est avantageusement plus épaisse que la partie courante, sur une longueur de quelques millimètres. Le soudage était effectué par faisceau d'électrons ou laser sur une extrémité de 0,4 mm d'épaisseur. L'extrémité fixée au couvercle 14, en titane pur (plus conducteur que l'alliage), était également épaissie pour faciliter le soudage au couvercle, par faisceau d'électrons ou laser.

Dans un appareil du genre montré en figure 2, il est apparu que les pertes thermiques par conduction dans le tube et la base représentent au moins 50 % et généralement environ 70 %, des pertes totales, y compris dans l'élément détecteur.

L'utilisation d'un alliage de conductibilité réduite a donc une incidence importante sur la puissance requise de la machine frigorifique. Parmi les métaux, seuls le sélénium et le tellure ont une conductibilité inférieure à celle des alliages proposés, mais l'un et l'autre sont inutilisables pour des raisons mécaniques.

L'application et le mode de montage décrits en détail ne représentent que des exemples et le domaine d'application de l'invention s'étend à tous les systèmes de refroidissement d'une charge, comme cela a été indiqué plus haut.

## Revendications

1. Dispositif de liaison entre une source de froid et un élément (16) porté à une température cryogénique lors de son utilisation, comprenant un tube mince (10) délimitant un canal destiné à être occupé par un caloporteur, fermé à une extrémité par un couvercle relié thermiquement à l'élément et fixé à l'autre extrémité à une base (12) en contact avec l'ambiance,
caractérisé en ce que le tube est constitué en un alliage à base de titane comportant de 6 à 8 % d'aluminium, de 1 à 5 % de vanadium ou de zirconium, de 0,5 à 1 % de molybdène et éventuellement 2 % au plus d'étain.

2. Dispositif selon la revendication 1, destiné à porter à basse température un élément constitué par un détecteur infrarouge, comprenant de plus un cryostat constitué par une chemise (18) entourant le tube, fixée à la base et fermée par un hublot (20) en matériau transparent au rayonnement infrarouge.

3. Dispositif selon la revendication 1 ou 2, caractérisé en ce que le canal de circulation de caloporteur à basse température, un canal de réception du gaz fourni par un éjecteur, ou le cylindre d'une machine frigorifique à cycle fermé.

4. Dispositif selon la revendication 1, 2 ou 3, caractérisé en ce que la base, en alliage de titane, et le couvercle, en titane pur, sont soudés au tube par faisceau d'électrons au laser.

5. Dispositif selon la revendication 4, caractérisé en ce que les extrémités du tube sont plus épaisses que la partie courante.

6. Dispositif selon l'une quelconque des revendications précédentes, caractérisé en ce que l'alliage contient, en plus du titane et des impuretés inévitables :
8 % Al, 1 % V, 1 % Mo
6 % Al, 5 % Zr, 0,5 % Mo
6 % Al, 5 % Zr, 2 % Sn, 1 % Mo.
